# EUROPEAN PATENT SPECIFICATION

(11) **EP 2 565 251 B1**
(45) Date of publication and mention of the grant of the patent: **17.09.2014**
(21) Application number: 10850503.3
(22) Date of filing: 30.04.2010
(51) Int. Cl.: C09K 11/80, C09K 11/02

(54) **A RARE EARTH-ALUMINIUM/GALLATE BASED FLUORESCENT MATERIAL AND MANUFACTURING METHOD THEREOF**
FLUORESZIERENDES MATERIAL AUF SELTENERD-ALUMINIUM/GALLAT-BASIS UND HERSTELLUNGSVERFAHREN DAFÜR
MATÉRIAU FLUORESCENT À BASE DE TERRE RARE-ALUMINIUM/GALLATE ET SON PROCÉDÉ DE FABRICATION

(43) Date of publication of application: 06.03.2013
(73) Proprietor: Ocean's King Lighting Science&Technology Co., Ltd., Guangdong 518054 (CN)
(72) Inventor: ZHOU, Mingjie, Shenzhen Guangdong 518054 (CN); LIU, Jun, Shenzhen Guangdong 518054 (CN); MA, Wenbo, Shenzhen Guangdong 518054 (CN)
(74) Representative: Johnson, Richard Alan
(86) International application number: PCT/CN2010/072379
(87) International publication number: WO 2011/134170

(56) References cited:
- EP-A1- 1 681 336
- WO-A1-02/103748
- WO-A1-2008/012266
- CN-A- 1 803 974
- CN-A- 101 665 693
- XIAOMING LIU ET AL: "Synthesis and characterization of monodisperse spherical core-shell structured SiO2@Y3Al5O12:Ce3+/Tb3+ phosphors for field emission displays", JOURNAL OF NANOPARTICLE RESEARCH ; AN INTERDISCIPLINARY FORUM FOR NANOSCALE SCIENCE AND TECHNOLOGY, KLUWER ACADEMIC PUBLISHERS, DO, vol. 9, no. 5, 23 September 2006 (2006-09-23), pages 869-875, XP019506666, ISSN: 1572-896X

## Description

### FIELD OF THE INVENTION

The invention relates to fluorescent material technology field. More particularly, the invention relates to a rare earth-aluminium/gallate based fluorescent material and manufacturing method thereof.

### BACKGROUND OF THE INVENTION

Researches show that luminous performances of fluorescent powder have a relationship with the morphology and particle size thereof. The spherical or spherical-like fluorescent powder having a uniformity of 3 to 5µm is of high luminous intensity and easy to use. Spherical core-shell structured SiO₂ @ Y₃Al₅O₁₂ : Ce³⁺/Tb³⁺ phosphors are also known (Lin et al., Journal of Nanoparticle Research (2007) 9:869-875). However, luminous performances of fluorescent powder also have a close relationship with the preparation method thereof. Herein, the preparation process of high-temperature solid-state method is simple and suitable for industrial production, but, due to the limitations of the method, the luminous center in the matrix disperses nonuniformly, affecting their luminous efficiency. Also, a ball milling process is required because the particle size of prepared fluorescent powder is quite large. Impurities can be easily introduced and lattice defects can be caused during the ball milling process. Physical and chemical changes caused by the ball milling often lead to reduce luminance of fluorescent powder, which is unfavorable for their application. Therefore, how to improve the luminance of the fluorescent powder by improving the preparation methods thereof has been an important part of the fluorescent materials research in the field of materials chemistry and materials physics.

### SUMMARY OF THE INVENTION

In view of this, a rare earth-aluminium/gallate based fluorescent material having the advantages of uniform particle size, structure stability, excellent luminous intensity and luminous efficiency is provided.

And, a manufacturing method of rare earth-aluminium/gallate based fluorescent material having a simple process, low demand on equipment and no pollution, being easily controllable for the reaction, material morphology and particle size, and suitable for industrial production is provided.

The technical solution to solve the technical problem of the present invention is:

A rare earth-aluminium/gallate based fluorescent material comprising a core and a shell which coats said core, wherein said core is metal nanoparticle, and said shell is fluorescent powder having chemical formula of (Y₁₋ₓCeₓ)₃(Al_{1-y}Ga_{y})₅O₁₂, wherein 0<x≤0.5, 0≤y≤1.0.

And, a manufacturing method of rare earth-aluminium/gallate based fluorescent material is provided, comprising:

dissolving corresponding metal compound of metal nanoparticle, and then mixing with assistant agent and reducing agent successively, to obtain metal nanoparticle collosol; adding the metal nanoparticle collosol into the surface treatment agent polyvinylpyrrolidone, mixing and stirring to obtain metal nanoparticle blended collosol;

according to the stoichiometric ratio of the corresponding elements in the chemical formula of (Y₁₋ₓCeₓ)₃(Al_{1-y}Ga_{y})₅O₁₂, mixing yttrium salt, cerium salt, aluminum salt, gallium salt, then adding into said metal nanoparticle blended collosol under the temperature in the range of 70 to 90°C, obtaining metal mixed solution, wherein 0<x≤0.5, 0≤y≤1.0;

adding citric acid monohydrate into metal mixed solution, then adjusting pH of mixed solution to 3 to 5 with weak base, keeping the temperature constant in a range of 70 to 90°C for 3 to 6 hours, then drying to obtain precursor;

pre-burning said precursor, then calcinating in reducing atmosphere, cooling and then grinding, obtaining said rare earth-aluminium/gallate based fluorescent material.

In said rare earth-aluminium/gallate based fluorescent material and manufacturing method thereof, the rare earth-aluminium/gallate based fluorescent material is particulate fluorescent material having spherical or spherical-like structure, which comprises a core and shell, where the core is metal nanoparticle, and the shell is (Y₁₋ₓCeₓ)₃(Al_{1-y}Ga_{y})₅O₁₂. It makes the luminous intensity of the fluorescent material high by taking Ce as a luminous center, and the excitation band of said fluorescent material matches blue LED chips; the fluorescent material has a uniform particle size distribution, stable structure, excellent luminous efficiency; by coating metal nanoparticle, the luminous intensity of the fluorescent material is improved, and the position of the main emission peak is changed, which gives the fluorescent material a great value in use and adjustment of color temperature and spectrum; the rare earth-aluminium/gallate based fluorescent material is prepared by using wet chemical method, that not only lower the temperature in the synthesis reaction, but also improve the microstructure and macroscopic properties of the rare earth-aluminium/gallate based fluorescent material, the obtained rare earth-aluminium/gallate based fluorescent material have uniform particle size distribution, the luminescent performances of the material are improved effectively. Also, the particle size of the rare earth-aluminium/gallate based fluorescent material can be flexibly adjusted by controlling the metal nanoparticle diameter and the thickness of the fluorescent powder without the introduction of other impurities to obtain products of high quality. Meanwhile, the only requirement of the manufacturing method of the rare earth-aluminium/gallate based fluorescent material is to control temperature and add reactants in an appropriate proportion, the products can be obtained. Thus, the preparation process is simple, low equipment requirements, no pollution, easy to control, suitable for industrial production.

### BRIEF DESCRIPTION OF THE DRAWINGS

Further description of the present invention will be illustrated, which combined with embodiments in the drawings:

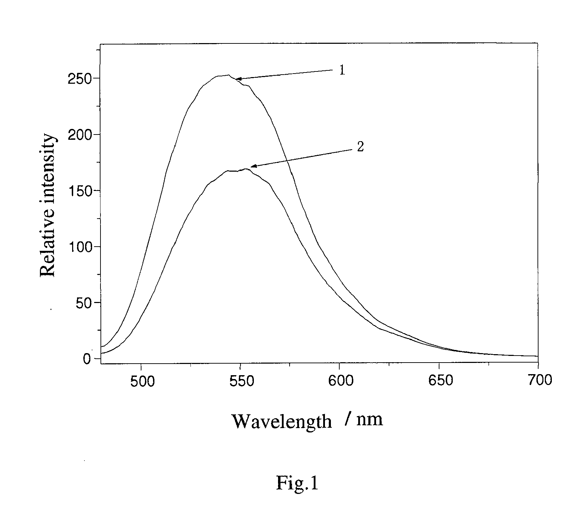

Fig.1 is an emission spectrum of rare earth-aluminium/gallate based fluorescent material in Example 2 of the present invention with respect to (Y_{0.98}Ce_{0.02})₃Al₅O₁₂ at an excitation wavelength of 473nm. Herein, curve 1 is the emission spectrum of the fluorescent material (Y_{0.98}Ce_{0.02})₃Al₅O₁₂@Ag; curve 2 is the emission spectrum of the fluorescent material (Y_{0.98}Ce_{0.02})₃Al₅O₁₂.

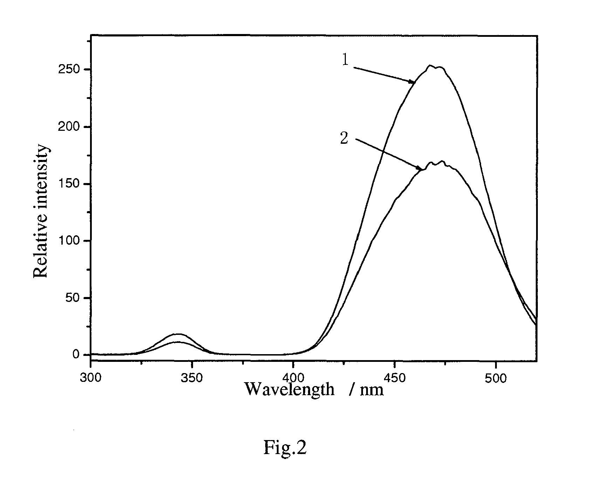

Fig.2 is an excitation spectrum of rare earth-aluminium/gallate based fluorescent material in Example 2 of the present invention with respect to (Y_{0.98}Ce₀.₀₂)₃Al₅O₁₂. Herein, curve 1 is the excitation spectrum of the fluorescent material (Y₀.₉₈Ce₀.₀₂)₃Al₅O₁₂@Ag at a monitoring wavelength of 542nm; curve 2 is the excitation spectrum of the fluorescent material (Y_{0.98}Ce_{0.02})₃Al₅O₁₂ at a monitoring wavelength of 552nm.

### DETAILED DESCRIPTION OF ILLUSTRATED EMBODIMENTS

Further description of the present invention will be illustrated, which combined with embodiments in the drawings, in order to make the purpose, the technical solution and the advantages clearer. While the present invention has been described with reference to particular embodiments, it will be understood that the embodiments are illustrative and that the invention scope is not so limited.

The present invention provides a rare earth-aluminium/gallate based fluorescent material comprising a core and a shell which coats said core, wherein said core is metal nanoparticle, and said shell is a fluorescent powder having chemical formula of (Y₁₋ₓCeₓ)₃(Al_{1-y}Ga_{y})₅O₁₂, wherein 0<x≤0.5, 0≤y≤1.0.

The chemical formula of said rare earth-aluminium/gallate based fluorescent material can be expressed as: (Y₁₋ₓCeₓ)₃(Al_{1-y}Ga_{y})₅O₁₂@zM, wherein, @ stands for taking M as core, taking (Y₁₋ₓCeₓ)₃(Al_{1-y}Ga_{y})₅O₁₂ as shell, M is coated in (Y₁₋ₓCeₓ)₃(Al_{1-y}Ga_{y})₅O₁₂. Where, 0 < x≤0.5, preferably, 0.02≤x≤0.25; 0≤y≤0.7, preferably, 0.2≤y≤0.8 or/and 1 × 10⁻⁴≤y≤1 × 10⁻³; z is the molar ratio of M to (Y₁₋ₓCeₓ)₃(Al_{1-y}Ga_{y})₅O₁₂, 0< z ≤ 1 × 10⁻²; M is metal nanoparticle, preferably at least one of Ag, Au, Pt, Pd nanoparticle.

The shell coats said core in layered form, said rare earth-aluminium/gallate based fluorescent material has spherical or spherical-like particulate structure.

Said rare earth-aluminium/gallate based fluorescent material is particulate fluorescent material having spherical or spherical-like structure, which comprises a core and shell, where the core is metal nanoparticle, and the shell is (Y₁₋ₓCeₓ)₃(Al_{1-y}Ga_{y})₅O₁₂. It takes Ce as a luminous center. The excitation band of said fluorescent material is in a range of 400 to 520nm which matches blue LED chips; the emission band is in a range of 475 to 675, the high luminous intensity is high, even higher than that of the commercial powders YAG: Ce.

By coating metal nanoparticle, the luminous intensity of said rare earth-aluminium/gallate based fluorescent material is improved, and the position of the main emission peak is changed, which gives the fluorescent material a great value in use. At the same time, the fluorescent material has a uniform particle size distribution, a stable structure. Enhancing the fluorescence by plasmon resonance generated on metal surface, the luminous efficiency and luminous intensity of the fluorescent powder is greatly improved.

Moreover, the present invention provides a manufacturing method of said rare earth-aluminium/gallate based fluorescent material, comprising:

dissolving corresponding metal compound of metal nanoparticle, and then mixing with assistant agent and reducing agent successively, to obtain metal nanoparticle collosol;

adding the metal nanoparticle collosol into the surface treatment agent polyvinylpyrrolidone, mixing and stirring to obtain metal nanoparticle blended collosol;

according to the stoichiometric ratio of the corresponding elements in the chemical formula of (Y₁₋ₓCeₓ)₃(Al_{1-y}Ga_{y})₅O₁₂, mixing yttrium salt, cerium salt, aluminum salt, gallium salt, then adding into said metal nanoparticle blended collosol under the temperature in the range of 70 to 90°C, obtaining metal mixed solution, wherein<x≤0.5, 0≤y≤1.0;

adding citric acid monohydrate into metal mixed solution, then adjusting pH of mixed solution to 3 to 5 with weak base, keeping the temperature constant in a range of 70 to 90°C for 3 to 6 hours, then drying to obtain precursor;

pre-burning said precursor, then calcinating in reducing atmosphere, cooling and then grinding, obtaining said rare earth-aluminium/gallate based fluorescent material.

A preferred method of making said metal nanoparticle collosol is:

1) weighing corresponding metal compound of metal nanoparticle and dissolving in solvent, to prepare metal salt solution, said metal compound is preferably at least one of silver nitrate, chloroauric acid, chloroplatinic acid, palladium chloride; said solvent is preferably but not limited to water and/or ethanol;

2) under the condition of magnetic stirring, dissolving one or more assistant agent in said solution obtained from the 1) step, to make the content of assistant agent in the final metal nanoparticle collosol preferably in the range of 1.5×10⁻⁴g/mL to 2.1×10⁻³g/mL, said assistant agent is preferably at least one of polyvinylpyrrolidone, sodium citrate, cetyl trimethyl ammonium bromide, sodium dodecyl sulfate, sodium dodecyl sulfonate, said assistant agent acts as a dispersant, which enables the solution obtained from the 1) step to form an uniform dispersion, preventing the final metal nanoparticle from agglomerating;

3) weighing reducing agent substance and dissolving in solvent, to prepare reducing agent solution, of which the concentration is in a preferred range of 1×10⁻³mol/L to 1×10⁻²mol/L; said reducing agent is preferably at least one of hydrazine hydrate, ascorbic acid, sodium borohydride; said solvent is preferably water and/or ethanol;

4) under the condition of magnetic stirring, adding the reducing agent solution obtained from the 3) step into the solution obtained from the 2) step according to the molar ratio of reducing agent to metal ion, which is in the range of 1.2 to 4.8:1; reacting for 10 to 45min and then obtaining metal nanoparticle collosol.

A preferred method of making said metal nanoparticle blended collosol is: the metal nanoparticle is subject to the surface treatment by adding metal nanoparticle collosol into the surface treatment agent solution, which is but not limited to polyvinylpyrrolidone (PVP); stirring and reacting to obtain metal nanoparticle blended collosol containing metal nanoparticle. Herein, the content of the addition amount of PVP in metal nanoparticle blended collosol is in a preferred range of 0.001 g/mL to 0.01g/mL, PVP is provided for surface treatment of the metal nanoparticle, the time of the surface treatment is in a preferred range of 8 to 24h, the objective of adding surface treatment agent is to improve the adsorption and deposition properties of metal nanoparticle, the objective of stirring and reacting is to make the surface of metal nanoparticle rough, which is beneficial to the adsorption and deposition of metal nanoparticle.

A preferred method of making said metal mixed solution is: according to the stoichiometric ratio of the corresponding elements in the chemical formula of (Y₁₋ₓCeₓ)₃(Al_{1-y}Ga_{y})₅O₁₂, mixing yttrium salt, cerium salt, aluminum salt, gallium salt under the condition of magnetic stirring, adding into metal nanoparticle blended collosol under the temperature in the range of 70 to 90°C, stirring completely to form metal nanoparticle mixed solution. Herein, yttrium salt is preferably one or two of Y (NO₃)3, YCl₃; cerium salt is preferably one or two of Ce (NO₃)₃, CeCl₃; aluminum salt is preferably one or two of Al(NO₃)₃, AlCl₃; gallium salt is preferably one or two of Ga(NO₃)₃, GaCl₃; herein, the temperature is preferably controlled by heating in water-bath.

A preferred method of making said precursor is: measuring citric acid monohydrate, which is 1 to 3 times as much as the molar mass of total metal ion in metal mixed solution, and dissolving in alcohols to prepare alcoholic solution of citric acid monohydrate with a concentration of 1.1 to 3.3mol/L, dripping into said metal mixed solution, then adjusting the pH of said mixed solution to 3 to 5 with weak base, keep the temperature constant in a range of 70 to 90°C for 3 to 6 hours by stirring in water-bath, then drying to obtain precursor. Herein, citric acid monohydrate can be directly added into metal mixed solution, but considering the reaction rate in this step, citric acid monohydrate is preferably made into alcoholic solution so that citric acid monohydrate can disperse in metal mixed solution rapidly and uniformly; said alcohols is preferably but not limited to ethanol, also, other common alcohols like methanol can be used; the used weak base is preferably ammonia water, in a preferred embodiment, when adjusting the pH of mixed solution to 3 to 5 with ammonia water, it is necessary to seal the reaction system against the volatilization of ammonia water; said drying preferably comprises: pre-drying in blast drying oven under the temperature in the range of 60 to 90°C, after that, stoving under the temperature in the range of 90 to 150°C; pre-drying can be natural drying, drying in the sun or other methods. In this step, citric acid monohydrate acts as a complexing agent; in order to avoid the introduction of other impurities, weak base is preferably ammonia water.

Said pre-burning is preferably carried out under the temperature in the range of 800 to 1200°C for 3 to 8h by placing precursor into high temperature furnace, the pre-burned precursor can be grinded before being calcinated in high temperature furnace or tube furnace, this helps remove organics from precursor; calcinating is preferably carried out in reducing atmosphere under the temperature in the range of 900 to 1450°C for 2 to 5h by placing the pre-burned precursor into box-type high-temperature furnace or tube furnace; said reducing atmosphere is preferably any gas selected from mixed gas of nitrogen and hydrogen, pure hydrogen, carbon monoxide; in a preferred embodiment, when the reducing atmosphere is mixed gas of nitrogen and hydrogen, the volume ratio of nitrogen to hydrogen is preferably 95 : 5 or 90 : 10.

The rare earth-aluminium/gallate based fluorescent material is prepared by using wet chemical method, that not only lower the temperature in the synthesis reaction, but also to improve the microstructure and macroscopic properties of the rare earth-aluminium/gallate based fluorescent material, the obtained rare earth-aluminium/gallate based fluorescent material have uniform particle size distribution, the luminescent performances of the material are improved effectively. Also, the particle size of the rare earth-aluminium/gallate based fluorescent material can be flexibly adjusted by controlling the metal nanoparticle diameter and the thickness of (Y₁₋ₓCeₓ)₃(Al_{1-y}Ga_{y})₅O₁₂ without the introduction of other impurities to obtain products of high quality. Meanwhile, the only requirement of the manufacturing method of the rare earth-aluminium/gallate based fluorescent material is to control temperature and add reactants in an appropriate proportion, the products can be obtained. Thus, the preparation process is simple, low equipment requirements, no pollution, easy to control, suitable for industrial production.

Special examples are disclosed as follows to demonstrate manufacturing method of rare earth-aluminium/gallate based fluorescent material and the performance of it.

### Example 1

The manufacturing of a rare earth-aluminium/gallate based fluorescent material having chemical formula of (Y_{0.5}Ce_{0.5})₃(Al_{0.5}Ga_{0.5})₅O₁₂@ Au by using sol-gel coating method:

The manufacturing method of Au nanoparticle is: weighing and dissolving 20.6mg of chloroauric acid (AuCl₃·HCl·4H₂O) in 16.8 mL of deionized water, after chloroauric acid dissolved completely, aqueous solution of chloroauric acid is obtained; weighing and dissolving 14mg of sodium citrate and 6mg of cetyl trimethyl ammonium bromide in the aqueous solution of chloroauric acid under the condition of magnetic stirring, solution A is obtained; weighing and dissolving 1.9mg of sodium borohydride and 17.6mg of ascorbic acid in 10mL of deionized water, respectively, obtaining 10mL of 5×10⁻³mol/L aqueous solution of sodium borohydride and 10mL of 1×10⁻²mol/L aqueous solution of ascorbic acid; under the condition of magnetic stirring, adding 0.08mL aqueous solution of sodium borohydride into the solution A, stirring and reacting for 5min, and then adding 3.12mL of 1×10⁻²mol/L aqueous solution of ascorbic acid into the solution A, continue to react for 30min, then obtaining 20mL of Au nanoparticle collosol containing 5×10⁻³mol/L of Au; taking and placing 8mL of 5×10⁻³mol/L Au nanoparticle collosol into a beaker, and adding 10mg of PVP, magnetically stirring for 8h. The surface-treated Au nanoparticle blended collosol B is obtained.

The manufacturing method of (Y₀.₅Ce_{0.5})₃(Al_{0.3}Ga_{0.5})₅O₁₂@ Au is: placing 10mL of 1.0 mol/L Al(NO₃)₃ solution, 6.0ml of 1mol/L Y(NO₃)₃ solution, 10ml of 1mol/L Ga(NO₃)₃ solution and 6.0ml of 1mol/L Ce(NO₃)₃ solution into a conical flask, under the condition of magnetic stirring, heating in water-bath which is maintained at 70°C, then adding said Au nanoparticle blended collosol B, stirring uniformly to get metal mixed solution C; weighing 6.7245g of citric acid monohydrate (the amount is as much as the molar mass of total metal ion in metal mixed solution C) and dissolving in 30 ml of ethanol to make up solution, dripping the solution into the metal mixed solution C, then adding ammonia water to adjust pH to about 3, placing into 90°C water-bath, stirring, and keep the temperature constant for 3h, drying in blast drying oven at 60°C for 12h, then drying completely at 150°C to obtain precursor; placing the precursor into high temperature furnace and pre-burning at 800°C for 8h, cooling to the room temperature, grinding, then placing into tube furnace, calcinating in reducing atmosphere (the volume ratio of N₂ to H₂ is 90:10) at 1200°C for 3h, naturally cooling. The desired fluorescent material (Y₀.₅Ce₀.₅)₃(Al_{0.5}Ga_{0.5})₅O₁₂@ Au is obtained.

### Example 2

The manufacturing of a rare earth-aluminium/gallate based fluorescent material having chemical formula of (Y_{0.98}Ce_{0.02})₃Al₅O₁₂@ Ag by using sol-gel coating method:

The manufacturing method of Ag nanoparticle is: weighing and dissolving 3.40mg of silver nitrate (AgNO₃) in 18.4 mL of deionized water, after silver nitrate dissolved completely, aqueous solution of silver nitrate is obtained; weighing and dissolving 42mg of sodium citrate in the aqueous solution of silver nitrate under the condition of magnetic stirring, solution A is obtained; weighing and dissolving 5.7mg of sodium borohydride in 10mL of deionized water obtaining 10ml of 1.5×10⁻²mol/L aqueous solution of sodium borohydride; under the condition of magnetic stirring, adding 1.6mL of 1.5×10⁻²mol/L aqueous solution of sodium borohydride into the solution A at once, continue to react for 10min, then obtaining 20mL of Ag nanoparticle collosol containing 1×10⁻³mol/L of Ag; taking 2mL of 1×10⁻³mol/L Ag nanoparticle collosol into a beaker, and adding 2mg of PVP, magnetically stirring for 12h. The surface-treated Ag nanoparticle blended collosol B is obtained.

The manufacturing method of (Y_{0.98}Ce_{0.02})₃Al₅O₁₂@ Ag is: placing 20mL of 1.0 mol/L Al(NO₃)₃ solution, 11.8ml of 1mol/L Y(NO₃)₃ solution, 1.2ml of 0.2mol/L Ce(NO₃)₃ solution into a conical flask, under the condition of magnetic stirring, heating in water-bath which is maintained at 80°C, then adding said Ag nanoparticle blended collosol B, stirring uniformly to get metal mixed solution C; weighing 13.4490g of citric acid monohydrate (the amount is 2 times as much as the molar mass of total metal ion in metal mixed solution C) and dissolving in 30 ml of ethanol to make up solution, dripping the solution into the metal mixed solution C, then adding ammonia water to adjust pH to about 4, placing into 80°C water-bath, stirring, and keep the temperature constant for 6h, drying in blast drying oven at 60°C for 10h, then drying completely at 100°C to obtain precursor; placing the precursor into high temperature furnace and pre-burning at 1200°C for 6h, cooling to the room temperature, grinding, then placing into tube furnace, calcinating in reducing atmosphere (the volume ratio of N₂ to H₂ is 95:5) at 1300°C for 3h, naturally cooling. The desired fluorescent material (Y_{0.98}Ce_{0.02})₃Al₅O₁₂@ Ag is obtained. The no metal nanoparticle-coating fluorescent material (Y_{0.98}Ce_{0.02})₃Al₅O₁₂ is prepared using the same method.

Fig.1 is an emission spectrum of rare earth-aluminium/gallate based fluorescent material in Example 2 of the present invention with respect to (Y_{0.98}Ce_{0.02})₃Al₅O₁₂ at an excitation wavelength of 473nm. Herein, curve 1 is the emission spectrum of the fluorescent material (Y_{0.98}Ce_{0.02})₃Al₅O₁₂@Ag; curve 2 is the emission spectrum of the fluorescent material (Y_{0.98}Ce_{0.02})₃Al₅O₁₂. The luminous intensity of metal nanoparticle-coating material is 40% higher than that of no metal nanoparticle-coating material.

Fig.2 is an excitation spectrum of the fluorescent material in Example 2 of the present invention with respect to (Y_{0.98}Ce_{0.02})₃Al₅O₁₂. Herein, curve 1 is the excitation spectrum of the fluorescent material (Y_{0.98}Ce_{0.02})₃Al₅O₁₂@Ag at a monitoring wavelength of 542nm; curve 2 is the excitation spectrum of the fluorescent material (Y_{0.98}Ce_{0.02})₃Al₅O₁₂ at a monitoring wavelength of 552nm.

### Example 3

The manufacturing of a rare earth-aluminium/gallate based fluorescent material having chemical formula of (Y_{0.98}Ce_{0.02})₃Al₅O₁₂@ Pt by using sol-gel coating method:

The manufacturing method of Pt nanoparticle is: weighing and dissolving 5.18mg of chloroplatinic acid (H₂PtCl₆•6H₂O) in 17 mL of deionized water, after chloroplatinic acid dissolved completely, aqueous solution of chloroplatinic acid is obtained; weighing and dissolving 8mg of sodium citrate and 12mg of sodium dodecyl sulfonate in the aqueous solution of chloroplatinic acid under the condition of magnetic stirring, solution A is obtained; weighing and dissolving 0.38mg of sodium borohydride in 10mL of deionized water obtaining 10mL of 1×10⁻³mol/L aqueous solution of sodium borohydride, preparing 10mL of 1×10⁻²mol/L hydrazine hydrate solution at the same time; under the condition of magnetic stirring, adding 0.4mL aqueous solution of sodium borohydride into the solution A, stirring and reacting for 5min, and then adding 2.6mL of 1×10⁻²mol/L hydrazine hydrate solution into the solution A, continue to react for 40min, then obtaining 20mL of Pt nanoparticle collosol containing 5×10⁻⁴mol/L of Pt; taking 16mL of 5×10⁻⁴mol/L Pt nanoparticle collosol into a beaker, and adding 16mg of PVP, magnetically stirring for 12h. The surface-treated Pt nanoparticle blended collosol B is obtained.

The manufacturing method of (Y_{0.98}Ce_{0.05})₃Ga₅O₁₂@ Pt is: placing 20mL of 1.0 mol/L Ga(NO₃)₃ solution, 11.4ml of 1.0mol/L Y(NO₃)₃ solution, 0.6ml of 1mol/L Ce(NO₃)₃ solution into a conical flask, under the condition of magnetic stirring, heating in water-bath which is maintained at 90°C, then adding said Pt nanoparticle blended collosol B, stirring uniformly to get metal mixed solution C; weighing 13.4490g of citric acid monohydrate (the amount is 2 times as much as the molar mass of total metal ion in metal mixed solution C) and dissolving in 30 ml of ethanol to make up solution, dripping the solution into the metal mixed solution C, then adding ammonia water to adjust pH to about 5, placing into 90°C water-bath, stirring, and keep the temperature constant for 3h, drying in blast drying oven at 90°C for 15h, then drying completely at 120°C to obtain precursor; placing the precursor into high temperature furnace and pre-burning at 1000°C for 3h, cooling to the room temperature, grinding, then placing into tube furnace, calcinating in reducing atmosphere (the volume ratio of N₂ to H₂ is 90:10) at 1450°C for 2h, naturally cooling. The desired fluorescent material (Y_{0.98}Ce_{0.05})₃Ga₅O₁₂@ Pt is obtained.

### Example 4

The manufacturing of a rare earth-aluminium/gallate based fluorescent material having chemical formula of (Y_{0.75}Ce_{0.25})₃(Al_{0.8}Ga_{0.2})₅O₁₂@ Pd by using sol-gel coating method:

The manufacturing method of Pd nanoparticle is: weighing and dissolving 0.43mg of palladium chloride (PdCl₂•2H₂O) in 8.5 mL of deionized water, after palladium chloride dissolved completely, aqueous solution of palladium chloride is obtained, weighing and dissolving 11mg of sodium citrate and 4mg of sodium dodecyl sulfate in the aqueous solution of palladium chloride under the condition of magnetic stirring, solution A is obtained; weighing and dissolving 3.8mg of sodium borohydride in 10mL of deionized water obtaining 1×10⁻²mol/L reducing aqueous solution of sodium borohydride; under the condition of magnetic stirring, adding rapidly 0.48mL of 1×10⁻²mol/L aqueous solution of sodium borohydride into the solution A, continue to react for 20min, then obtaining 10mL of Pd nanoparticle collosol containing 1×10⁻⁴mol/L of Pd; taking 4mL of 1×10⁻⁴mol/L Pd nanoparticle collosol into a beaker, and adding 5mg of PVP, magnetically stirring for 8h. The surface-treated Pd nanoparticle blended collosol B is obtained.

The manufacturing method of (Y_{0.75}Ce_{0.25})₃(Al_{0.8}Ga_{0.2})₅O₁₂@ Pd is: placing 16mL of 1.0 mol/L Al(NO₃)₃ solution, 4.0ml of 1mol/L Ga(NO₃)₃ solution, 9.0ml of 1mol/L Y(NO₃)₃ and 3.0ml of 1mol/L Ce(NO₃)₃ solution into a conical flask, under the condition of magnetic stirring, heating in water-bath which is maintained at 80°C, then adding said Pd nanoparticle blended collosol B, stirring uniformly to get metal mixed solution C; weighing 20.1734g of citric acid monohydrate (the amount is 3 times as much as the molar mass of total metal ion in metal mixed solution C) and dissolving in 30 ml of ethanol to make up solution, dripping the solution into the metal mixed solution C, then adding ammonia water to adjust pH to about 5, sealing, placing into 80°C water-bath, stirring, and keep the temperature constant for 5h, drying in blast drying oven at 60°C for 12h, then drying completely at 100°C to obtain precursor; placing the precursor into high temperature furnace and pre-burning at 1200°C for 5h, cooling to the room temperature, grinding, then placing into tube furnace, calcinating in reducing atmosphere (CO) at 900°C for 5h, naturally cooling. The desired fluorescent material is obtained.

### Example 5

The manufacturing of a rare earth-aluminium/gallate based fluorescent material having chemical formula of (Y_{0.98}Ce_{0.1})₃(Al_{0.2}Ga_{0.8})₅O₁₂@ Ag by using sol-gel coating method:

The manufacturing method of Ag nanoparticle is: weighing and dissolving 3.40mg of silver nitrate (AgNO₃) in 18.4 mL of deionized water, after silver nitrate dissolved completely, aqueous solution of silver nitrate is obtained; weighing and dissolving 42mg of sodium citrate in the aqueous solution of silver nitrate under the condition of magnetic stirring, solution A is obtained; weighing and dissolving 5.7mg of sodium borohydride in 10mL of deionized water obtaining 10ml of 81.5×10⁻²mol/L aqueous solution of sodium borohydride; under the condition of magnetic stirring, adding 1.6mL of 1.5×10⁻²mol/L aqueous solution of sodium borohydride into solution A at once, continue to react for 10min, then obtaining 20mL of Ag nanoparticle collosol containing 1×10⁻³mol/L of Ag; taking 4mL of 1×10⁻³mol/L Ag nanoparticle collosol into a beaker, and adding 40mg of PVP, magnetically stirring for 24h. The surface-treated Ag nanoparticle blended collosol B is obtained.

The manufacturing method of (Y_{0.9}Ce_{0.1})₃(Al_{0.2}Ga_{0.8})₅O₁₂@ Ag is: placing 10.8mL of 1.0 mol/L Y(NO₃)₃ solution, 2.4ml of 1mol/L Ce(NO₃)₃ solution, 4.0ml of 1mol/L Al(NO₃)₃ solution and 16ml of 1 mol/L Ga(NO₃)₃ solution into a conical flask, under the condition of magnetic stirring, heating in water-bath which is maintained at 80°C, then adding said Ag nanoparticle blended collosol B, stirring uniformly to get metal mixed solution C; weighing 13.4490g of citric acid monohydrate (the amount is 2 times as much as the molar mass of total metal ion in metal mixed solution C) and dissolving in 30 ml of ethanol to make up solution, dripping the solution into the metal mixed solution C, then adding 1mol/L sodium bicarbonate solution to adjust pH to about 4, placing into 80°C water-bath, stirring, and keep the temperature constant for 6h, drying naturally, then drying completely at 100°C to obtain precursor; placing the precursor into tube furnace and calcinating in reducing atmosphere (H₂) at 1200°C for 4h, cooling to the room temperature. The desired fluorescent material (Y_{0.9}Ce_{0.1})₃(Al_{0.2}Ga_{0.8})₅O₁₂@ Ag is obtained.

### Example 6

The manufacturing of a rare earth-aluminium/gallate based fluorescent material having chemical formula of (Y_{0.98}Ce_{0.1})₃(Al_{0.2}Ga_{0.8})₅O₁₂@ Pt/Au by using sol-gel coating method:

The manufacturing method of Pt/Au nanoparticle is: weighing and dissolving 6.2mg of chloroauric acid (AuCl₃•HCl•4H₂O) and 7.8mg of chloroplatinic acid (H₂PtCl₆•6H₂O) in 28mL of deionized water, mixed solution of chloroauric acid and chloroplatinic acid is obtained; after dissolved completely, weighing and dissolving 22mg of sodium citrate and 20mg of PVP in the mixed solution under the condition of magnetic stirring, solution A is obtained; weighing and dissolving 5.7mg of sodium borohydride 10mL of deionized water, obtaining 10mL of 1.5×10⁻²mol/L aqueous solution of sodium borohydride; under the condition of magnetic stirring, adding 2mL of 1.5×10⁻²mol/L aqueous solution of sodium borohydride into the solution A at once, continue to react for 20min, then obtaining 30mL of Pt/Au nanoparticle collosol containing 1×10⁻³mol/L of total metal particle; taking 5mL of Pt/Au nanoparticle collosol and adding 20mg of PVP, magnetically stirring for 6h. The surface-treated Pt/Au nanoparticle blended collosol B is obtained.

The manufacturing method of (Y_{0.9}Ce_{0.1})₃(Al_{0.2}Ga_{0.8})₅O₁₂@ Pt/Au is: placing 10.8mL of 1.0 mol/L YCl₃ solution, 2.4ml of 1 mol/L CeCl₃ solution, 4.0ml of 1 mol/L AlCl₃ solution and 16ml of 1 mol/L GaCl₃ solution into a conical flask, under the condition of magnetic stirring, heating in water-bath which is maintained at 70°C, then adding the Pt/Au nanoparticle blended collosol B, stirring uniformly to get metal mixed solution C; weighing 13.4490g of citric acid monohydrate (the amount is 2 times as much as the molar mass of total metal ion in metal mixed solution C) and dissolving in 30 ml of ethanol to make up solution, dripping the solution into the metal mixed solution C, then adding ammonia water to adjust pH to about 4, placing into 70°C water-bath, stirring, and keep the temperature constant for 6h, drying in blast drying oven at 60°C for 12h, then drying completely at 90°C to obtain precursor; placing the precursor into high temperature furnace and pre-burning at 1200°C for 4h, cooling to the room temperature, grinding, then placing into tube furnace, calcinating in reducing atmosphere (H₂) at 1300°C for 3h, naturally cooling. The desired fluorescent material (Y₀.₉Ce₀.₁)₃(Al_{0.2}Ga_{0.8})₅O₁₂@ Pt/Au is obtained.

## Claims

1. A rare earth-aluminium/gallate based fluorescent material comprising a core, and a shell which coats said core, wherein said core is a metal nanoparticle, and said shell is a fluorescent powder having chemical formula of (Y₁₋ₓCeₓ)₃(Al_{1-y}Ga_{y})₅O₁₂, wherein 0<x≤0.5, 0≤y≤1.0.

2. The rare earth-aluminium/gallate based fluorescent material as in claim 1, wherein the molar ratio of said core to shell is larger than 0, less than 1×10⁻²; wherein 0.02≤x≤0.25, 0.2≤y≤0.8 or/and 1×10⁻⁴≤y≤1×10⁻³,

3. The rare earth-aluminium/gallate based fluorescent material as in claim 1, wherein said metal nanoparticle is at least one of Ag, Au, Pt, Pd.

4. The rare earth-aluminium/gallate based fluorescent material as in claim 1, wherein said shell coats said core in layered form, said rare earth-aluminium/gallate based fluorescent material has spherical or spherical-like particulate structure.

5. A manufacturing method of rare earth-aluminium/gallate based fluorescent material, comprising:
dissolving corresponding metal compound of metal nanoparticle, and then mixing with assistant agent and reducing agent successively, to obtain metal nanoparticle collosol; adding the metal nanoparticle collosol into polyvinylpyrrolidone, mixing and stirring to obtain metal nanoparticle blended collosol;
according to the stoichiometric ratio of the corresponding elements in the chemical formula of (Y₁₋ₓCeₓ)₃(Al_{1-y}Ga_{y})₅O₁₂, mixing yttrium salt, cerium salt, aluminum salt, gallium salt, then adding into said metal nanoparticle blended collosol under the temperature in the range of 70 to 90°C, obtaining metal mixed solution, wherein 0<x≤0.5, 0≤y≤1.0;
adding citric acid monohydrate into said metal mixed solution, then adjusting pH of mixed solution to 3 to 5 with weak base, keep the temperature constant in a range of 70 to 90°C for 3 to 6 hours, then drying to obtain precursor;
pre-burning said precursor, then calcinating in reducing atmosphere, cooling and then grinding, obtaining said rare earth-aluminium/gallate based fluorescent material.

6. The manufacturing method of rare earth-aluminium/gallate based fluorescent material as in claim 5, wherein, in the step of making said metal nanoparticle collosol, the corresponding metal compound of metal nanoparticle is at least one of silver nitrate, chloroauric acid, chloroplatinic acid, palladium chloride;
said assistant agent is at least one of polyvinylpyrrolidone, sodium citrate, cetyl trimethyl ammonium bromide, sodium dodecyl sulfate, sodium dodecyl sulfonate;
said reducing agent is at least one of hydrazine hydrate, ascorbic acid, sodium borohydride.

7. The manufacturing method of rare earth-aluminium/gallate based fluorescent material as in claim 5 or 6, wherein the molar ratio of said corresponding metal ion of metal nanoparticle to reducing agent is 1:1.2 to 4.8.

8. The manufacturing method of rare earth-aluminium/gallate based fluorescent material as in claim 5, wherein, in the step of making said metal mixed solution, said yttrium salt is at least one of Y (NO₃)₃, YCl₃;
said cerium salt is at least one of Ce (NO₃)₃, CeCl₃;
said aluminum salt is at least one of Al (NO₃)₃, AlCl₃;
said gallium salt is at least one of Ga (NO₃)₃, GaCl₃.

9. The manufacturing method of rare earth-aluminium/gallate based fluorescent material as in claim 5, wherein, in the step of making said precursor, citric acid monohydrate is made into alcoholic solution of citric acid monohydrate before being used, the molar ratio of citric acid monohydrate to total metal ion in metal mixed solution is 1 to 3:1;
said weak base is ammonia water;
said drying comprises: pre-drying under the temperature in the range of 60 to 90°C, then stoving under the temperature in the range of 90 to 150°C.

10. The manufacturing method of rare earth-aluminium/gallate based fluorescent material as in claim 5, wherein,
said pre-burning is carried out under the temperature in the range of 800 to 1200°C for 3 to 8 hours;
said calcination is carried out under the temperature in the range of 900 to 1450°C for 2 to 5 hours;
said reducing atmosphere is any gas selected from mixed gas of nitrogen and hydrogen, pure hydrogen, carbon monoxide.

## Patentansprüche

1. Auf Seltenerd-Aluminium-Gallat basierendes fluoreszierendes Material, das einen Kern und eine Hülle, die den Kern beschichtet, umfasst, worin der Kern ein Metall-Nanopartikel ist und die Hülle ein fluoreszierendes Pulver mit der chemischen Formel (Y₁₋ₓCeₓ)₃(Al_{1-y}Ga_{y})₅O₁₂ ist, worin 0 < x ≤ 0,5, 0 ≤ y ≤ 1,0 ist.

2. Auf Seltenerd-Aluminium-Gallat basierendes fluoreszierendes Material nach Anspruch 1, worin das Molverhältnis des Kerns zur Hülle größer ist als 0, geringer ist als 1 x 10⁻² ; worin 0,02 ≤ x ≤ 0,25, 0,2 ≤ y ≤ 0,8 und/oder 1 x 10⁻⁴ ≤ y ≤ 1 x 10⁻³ ist.

3. Auf Seltenerd-Aluminium-Gallat basierendes fluoreszierendes Material nach Anspruch 1, worin der Metall-Nanopartikel zumindest eines aus Ag, Au, Pt, Pd ist.

4. Auf Seltenerd-Aluminium-Gallat basierendes fluoreszierendes Material nach Anspruch 1, worin die Hülle den Kern in einer geschichteten Form beschichtet, wobei das auf Seltenerd-Aluminium-Gallat basierende fluoreszierende Material eine kugelförmige oder kugelartige partikuläre Struktur aufweist.

5. Herstellungsverfahren eines auf Seltenerd-Aluminium-Gallat basierenden fluoreszierenden Materials, das Folgendes umfasst:
Auflösen einer entsprechenden Metallverbindung eines Metall-Nanopartikels und anschließendes Mischen mit einem Hilfsmittel und darauffolgend mit einem Reduktionsmittel, um Metall-Nanopartikel-Kolloid zu erhalten; Zusetzen des Metall-Nanopartikel-Kolloids zu Polyvinylpyrrolidon, Vermischen und Rühren, um ein gemischtes Metall-Nanopartikel-Kolloid zu erhalten;
Vermischen von Yttriumsalz, Cersalz, Aluminiumsalz, Galliumsalz gemäß dem stöchiometrischen Verhältnis der entsprechenden Elemente in der chemischen Formel (Y₁₋ₓCeₓ)₃(Al_{1-y}Ga_{y})₅O₁₂, dann Hinzufügen zu dem gemischten Metall-Nanopartikel-Kolloid bei Temperaturen im Bereich von 70 bis 90 °C, Erhalten der gemischten Metalllösung, worin 0 < x ≤ 0,5, 0 ≤ y ≤ 1,0 ist;
Zusetzen von Citronensäuremonohydrat zu der gemischten Metalllösung, danach Einstellen des pH der gemischten Lösung auf 3 bis 5 mit schwacher Base, Aufrechterhalten einer konstanten Temperatur in einem Bereich von 70 bis 90 °C 3 bis 6 h lang, danach Trocknen, um einen Vorläufer zu erhalten;
Vorbrennen des Vorläufers, danach ein Calcinieren in reduzierender Atmosphäre, Kühlen und dann Mahlen, um das auf Seltenerd-Aluminium-Gallat basierende fluoreszierende Material zu erhalten.

6. Herstellungsverfahren eines auf Seltenerd-Aluminium-Gallat basierenden fluoreszierenden Materials nach Anspruch 5, worin die entsprechende Metallverbindung des Metallnanopartikels in dem Schritt des Herstellens des Metall-Nanopartikel-Kolloids zumindest eine aus Silbernitrat, Chlorgoldsäure, Chlorplatinsäure, Palladiumchlorid ist;
das Hilfsmittel zumindest eines aus Polyvinylpyrrolidon, Natriumcitrat, Cetyltrimethylammoniumbromid, Nariumdodecylsulfat, Natriumdodecylsulfonat ist;
das Reduktionsmittel zumindest eines aus Hydrazinhydrat, Ascorbinsäure, Natriumborhydrid ist.

7. Herstellungsverfahren eines auf Seltenerd-Aluminium-Gallat basierenden fluoreszierenden Materials nach Anspruch 5 oder 6, worin das Molverhältnis des entsprechenden Metallions des Metall-Nanopartikels zu Reduktionsmittel 1:1,2 bis 4,8 beträgt.

8. Herstellungsverfahren eines auf Seltenerd-Aluminium-Gallat basierenden fluoreszierenden Materials nach Anspruch 5, worin im Schritt der Herstellung der gemischten Metalllösung das Yttriumsalz zumindest eines aus Y(NO₃)₃, YCl₃ ist;
das Cersalz zumindest eines aus Ce(NO₃)₃, CeCl₃ ist;
das Aluminiumsalz zumindest eines aus Al(NO₃)₃, AlCl₃ ist;
das Galliumsalz zumindest eines aus Ga(NO₃)₃, GaCl₃ ist.

9. Herstellungsverfahren eines auf Seltenerd-Aluminium-Gallat basierenden fluoreszierenden Materials nach Anspruch 5, worin im Schritt der Herstellung des Vorläufers Citronensäuremonohydrat zu einer alkoholischen Lösung von Citronensäuremonohydrat überführt wird, bevor sie verwendet wird, wobei das Molverhältnis des Citronensäuremonohydrats zu dem gesamten Metallion in der gemischten Metalllösung 1 bis 3:1 beträgt;
wobei die schwache Base Ammoniakwasser ist;
wobei das Trocknen Folgendes umfasst: ein Vortrocknen bei Temperaturen im Bereich von 60 bis 90 °C, danach ein Ofentrocknen bei Temperaturen im Bereich von 90 bis 150 °C.

10. Herstellungsverfahren eines auf Seltenerd-Aluminium-Gallat basierenden fluoreszierenden Materials nach Anspruch 5, worin
das Vorbrennen bei Temperaturen im Bereich von 800 bis 1200 °C 3 bis 8 h lang durchgeführt wird;
das Calcinieren bei Temperaturen im Bereich von 900 bis 1450 °C 2 bis 5 h lang durchgeführt wird;
die reduzierende Atmosphäre jedes Gas ist, das aus gemischtem Gas aus Stickstoff und Wasserstoff, reinem Wasserstoff, Kohlenmonoxid ausgewählt ist.

## Revendications

1. Matériau fluorescent à base de terres rares-aluminium/gallate comprenant un noyau, et une coque qui couvre ledit noyau, où ledit noyau est une nanoparticule de métal, et ladite coque est une poudre fluorescente ayant la formule chimique de (Y₁₋ₓCeₓ)₃(Al₁₋yGa_{y})₅O₁ᵢ₂, où 0<x≤0,5, 0≤y≤1,0.

2. Matériau fluorescent à base de terres rares-aluminium/gallate selon la revendication 1, dans lequel le rapport molaire dudit noyau à ladite coque est plus grand que 0, inférieure à 1x10⁻² ; où 0,02≤x≤0,25, 0,2≤y≤0,8 ou/et 1x10⁻⁴≤y≤1x10⁻³.

3. Matériau fluorescent à base de terres rares-aluminium/gallate selon la revendication 1, dans lequel ladite nanoparticule de métal est au moins une de Ag, Au, Pt, Pd.

4. Matériau fluorescent à base de terres rares-aluminium/gallate selon la revendication 1, dans laquelle ladite coque couvre ledit noyau sous une forme de couches, ledit matériau fluorescent à base de terres rares-aluminium/gallate possède une structure particulaire sphérique ou ressemblant à une telle structure.

5. Procédé de fabrication d'un matériau fluorescent à base de terres rares-aluminium/gallate, comprenant :
dissoudre un composé de métal correspondant de nanoparticule de métal, et mélanger ensuite avec un agent assistant et un agent réducteur successivement, pour obtenir un collosol de nanoparticule de métal ; ajouter le collosol de nanoparticule de métal à du polyvinylpyrrolidone, mélanger et agiter pour obtenir un collosol mélangé de nanoparticules de métal ;
en accord avec le rapport stoechiométrique des éléments correspondants dans la formule chimique de (Y₁₋ₓCex)₃(Al_{1-y}Ga_{y})₅O₁₂, mélanger du sel de yttrium, sel de cérium, sel d'aluminium, sel de gallium, ensuite ajouter à ladite nanoparticule de métal du collosol mélangé sous la température dans la plage de 70 à 90°C, en obtenant une solution métallique mélangée, dans laquelle O<x≤0,5, 0≤y≤1,0 ;
ajouter du monohydrate d'acide citrique à ladite solution métallique mélangée, ensuite ajuster le pH de la solution mélangée à 3 jusqu'à 5 avec une base faible, maintenir la température constante dans une plage de 70 à 90°C pendant 3 à 6 heures, ensuite sécher pour obtenir un précurseur ;
soumettre à une précombustion ledit précurseur, ensuite calciner dans une atmosphère de réduction, refroidir et ensuite broyer, obtenir ledit matériau fluorescent à base de terres rares-aluminium/gallate.

6. Procédé de fabrication d'un matériau fluorescent à base de terres rares-aluminium/gallate selon la revendication 5, dans lequel, à l'étape de fabrication dudit collosol de nanoparticules de métal, le composé métallique correspondant de la nanoparticule métallique est au moins un parmi le nitrate d'argent, l'acide chloroaurique, l'acide chloroplatinique, le chlorure de palladium ;
ledit agent assistant est au moins un parmi le polyvinylpyrrolidone, sodium citrate, cétyle triméthyle ammonium bromure, sodium dodecyl sulfate, sodium dodecyl sulfonate ;
ledit agent réducteur est au moins un parmi l'hydrate d'hydrazine, l'acide ascorbique, le sodium borohydrure.

7. Procédé de fabrication d'un matériau fluorescent à base de terres rares-aluminium/gallate selon la revendication 5 ou 6, dans lequel le rapport molaire dudit ion métallique correspondant de la nanoparticule métallique à l'agent réducteur est de 1 :1,2 à 4,8.

8. Procédé de fabrication d'un matériau fluorescent à base de terres rares-aluminium/gallate selon la revendication 5, dans lequel, lors de l'étape de fabrication de ladite solution métallique mélangée, ledit sel d'yttrium est au moins un de Y(NO₃)₃, YCl₃ ;
ledit sel de cérium est au moins un de Ce(NO₃)₃, CeCl₃ ;
ledit sel d'aluminium est au moins un de Al(NO₃)₃, AlCl₃ ;
ledit sel de gallium est au moins un de Ga(NO₃)₃, GaCl₃.

9. Procédé de fabrication d'un matériau fluorescent à base de terres rares-aluminium/gallate selon la revendication 5, dans lequel, à l'étape de fabrication dudit précurseur, du monohydrate d'acide citrique est amené en solution alcoolique du monohydrate d'acide citrique avant d'être utilisé, le rapport molaire du monohydrate d'acide citrique à l'ion métallique total dans la solution métallique mélangée est de 1 à 3 :1 ;
ladite base faible est l'eau d'ammoniac ;
ledit séchage comprend : un séchage préalable sous la température dans la plage de 60 à 90 °C, ensuite étuvage sous la température dans la plage de 90 à 150 °C.

10. Procédé de fabrication d'un matériau fluorescent à base de terres rares-aluminium/gallate selon la revendication 5, dans lequel
ladite combustion préalable est exécutée sous la température dans la plage de 800 à 1200 °C pendant 3 à 8 heures ;
ladite calcination est exécutée sous la température dans la plage de 900 à 1450 °C pendant 2 à 5 heures ;
ladite atmosphère de réduction est n'importe quel gaz sélectionné parmi un gaz mélangé d'azote et d'hydrogène, d'hydrogène pur et de monoxyde de carbone.
